# EUROPÄISCHE PATENTSCHRIFT

(11) **EP 3 180 131 B1**
(45) Veröffentlichungstag und Bekanntmachung des Hinweises auf die Patenterteilung: **09.09.2020**
(21) Anmeldenummer: 15744879.6
(22) Anmeldetag: 18.07.2015
(51) Int. Cl.: B04C 5/04, B01D 19/00, B01D 1/30, B01D 45/12

(54) **VORRICHTUNG ZUR BEHANDLUNG VON FLUIDGEMISCHEN**
DEVICE FOR TREATING FLUID MIXTURES
DISPOSITIF POUR LE TRAITEMENT DE MÉLANGES DE FLUIDES

(30) Priorität: 13.08.2014 DE 102014012094
(43) Veröffentlichungstag der Anmeldung: 21.06.2017
(73) Patentinhaber: Hydac Process Technology GmbH, 66538 Neunkirchen (DE)
(72) Erfinder: SCHLICHTER, Bernhard, 66123 Saarbrücken (DE); SCHLACHTER, Stefan, 66497 Contwig (DE); ZELLER, Sergej, 67734 Katzweiler (DE); WELKER, Michael, 66571 Eppelborn (DE)
(74) Vertreter: Bartels und Partner, Patentanwälte
(86) Internationale Anmeldenummer: PCT/EP2015/001485
(87) Internationale Veröffentlichungsnummer: WO 2016/023610

(56) Entgegenhaltungen:
- EP-A2- 1 844 840
- WO-A1-2014/022385
- DE-A1-102005 062 245
- US-A1- 2011 056 379

## Beschreibung

Die Erfindung betrifft eine Vorrichtung zur Behandlung von Fluidgemischen, die Gase, wie insbesondere Wasserstoff (H₂), Luft, Stickstoff (N₂) oder Erdgase, sowie Flüssigkeiten, wie insbesondere ionische Flüssigkeiten, Hydrauliköl oder Prozessflüssigkeiten, enthalten, mit den Merkmalen im Oberbegriff von Anspruch 1.

Im Speziellen bezieht sich die Erfindung auf die Behandlung eines unter einem hohen Druck stehenden Fluidgemisches, das Gas, wie Wasserstoff, und geringe Anteile an Flüssigkeiten, wie ionischen Flüssigkeiten, enthält.

Was man genau unter ionischen Flüssigkeiten zu verstehen hat, ist beispielhaft im Fachaufsatz "Ionische Flüssigkeiten: Einzigartige Materialien mit vielfältigen Möglichkeiten" aufgezeigt; abrufbar im Internet unter "CHE Ma-nager-online.com." mit Datum der Veröffentlichung 15. Juli 2014.

Wasserstoff wird in neuerer Zeit an Tankstellen für wasserstoffbetriebene Fahrzeuge mit hohem Druck von ca. 700 bar bis 1000 bar bereitgehalten. Mit Vorteil werden zur Verdichtung sog. "Ionenverdichter" eingesetzt, wie sie beispielhaft in der Internetveröffentlichung "Ionenverdichtertechnologie, Wie funktioniert ein Ionenverdichter?" unter der Firmenangabe "Flowserve" veröffentlicht ist, abrufbar unter www.dbi-gti.de mit Veröffentlichungsdatum 15. Juli 2014 (FCS-Präsentation 170909 deutsch-DBI). Dabei handelt es sich um einen Verdichter ähnlich einem Kolbenverdichter, der statt eines Kolbens eine ionische Flüssigkeitssäule nutzt. Die als Verdrängerelement wirkende Flüssigkeit hat gegenüber einem Verdrängerkolben den Vorteil, dass sie die entstehende Wärme besser ableiten kann, da sie zu einem gewissen Anteil mit dem komprimierten Gas aus dem Verdichter gefördert wird. Bei den ionischen Flüssigkeiten handelt es sich bekanntermaßen um organische Salze, die bei Temperaturen unter 100 °C flüssig sind, ohne dass das Salz dabei in einem Lösungsmittel, wie Wasser, gelöst ist. Bei dem hohen Druckniveau kommt es beim Betrieb der ionischen Verdichter zu einem Eintrag von Flüssigkeitsanteilen in das Gas. Dieser Eintrag wird fachsprachlich auch als Verschleppung bezeichnet und macht eine Behandlung des Fluidgemisches erforderlich.

Die DE 10 2005 062 245 A1 der Schutzrechtsinhaberin beschreibt eine gattungsgemäße Vorrichtung zur Behandlung von Fluidgemischen, die Gase, wie insbesondere Wasserstoff (H₂), Luft, Stickstoff (N₂) oder Erdgase, sowie Flüssigkeiten, wie insbesondere ionische Flüssigkeiten, Hydrauliköl oder Prozessflüssigkeiten, enthalten, mit mindestens einer ersten Abscheidestufe zum Auftrennen des Fluidgemisches in einen Flüssigkeitsanteil und einen Gasanteil, der mit einem verbleibenden Flüssigkeitsanteil verunreinigt ist, aus dem in mindestens einer weiteren Abscheidestufe dieser verbliebene Flüssigkeitsanteil abgereinigt wird, wobei als erste Abscheidestufe ein Zentrifugalabscheider vorgesehen ist.

Weitere Vorrichtungen zur Behandlung von Fluidgemischen gehen aus der EP 1 844 840 A2, der US 2011/0056379 A1 und der WO 2014/022385 A1 hervor.

Im Hinblick auf diese Problematik stellt sich die Erfindung die Aufgabe, eine Vorrichtung zur Verfügung zu stellen, die eine sichere Trennung der Gemischkomponenten ermöglicht.

Erfindungsgemäß ist diese Aufgabe durch eine Vorrichtung gelöst, die die Merkmale des Patentanspruchs 1 in seiner Gesamtheit aufweist.

Gemäß dem Kennzeichen von Anspruch 1 ist vorgesehen, dass eine Innenwand eines Zyklongehäuses des Zentrifugalabscheiders an dessen an einen Sammelraum angrenzendem unteren Ende eine Ringöffnung zwischen einem zu einer vertikalen Achse eines Gehäuses konzentrischen Rohrstück begrenzt, die eine Verbindung zwischen dem achsfernen Bereich des zylindrischen Zyklongehäuses und dem Sammelraum bildet. An der Innenwand des Zyklongehäuses angelagerte Tropfen können daher übergangslos in den Sammelraum abtropfen.

Demgemäß sieht die Erfindung mindestens eine erste Abscheidestufe zum Auftrennen des Fluidgemisches in einen Flüssigkeitsteil und einen Gasanteil, der mit einem verbleibenden Flüssigkeitsanteil verunreinigt ist, vor, aus dem in mindestens einer weiteren Abscheidestufe dieser verbliebene Flüssigkeitsanteil abgereinigt wird. Dadurch, dass erfindungsgemäß der Trennvorgang in mehreren Stufen stattfindet, lässt sich nach Durchführen eines ersten Trennvorgangs in einer zweiten Abscheidestufe eine Feinabtrennung durchführen, so dass ein betreffender Flüssigkeitsteil, wie ionische Flüssigkeit, in für die Verwendung erforderlicher Reinheit wieder zur Verfügung steht und der erhaltene Gasanteil frei von dieser Flüssigkeit gehalten ist.

Als erste Abscheidestufe ist ein Zentrifugalabscheider vorgesehen, in dem sich die relativ zum Gas dichtere Flüssigkeit aufgrund der Zentrifugalwirkung der erzeugten Drallströmung zur Wand des Zyklongehäuses bewegt, um von dort abzutropfen. Da die den Trennvorgang bewirkenden Zentrifugalkräfte durch die Geschwindigkeit des in das Zyklongehäuse einströmenden und die Vorrichtung durchströmenden Fluidgemisches erzeugt sind, ist die erfindungsgemäße Vorrichtung auch energieeffizient betreibbar.

Für eine effiziente Feinabscheidung verbliebener Flüssigkeitsanteile kann mit besonderem Vorteil als zweite Abscheidestufe ein Koaleszerfilter vorgesehen sein. Diese zweite Abscheidestufte kann der ersten Abscheidestufe unmittelbar oder vorzugsweise mittelbar über Zwischenschalten einer dritten Abscheidestufe folgen.

Bei besonders vorteilhaften Ausführungsbeispielen der Erfindung sind sämtliche Abscheidestufen in dem gemeinsamen Gehäuse angeordnet, das einen Eingang für das Fluidgemisch, einen Ausgang für den von Flüssigkeit getrennten Gasteil sowie zumindest einen Entleerungsausgang zur Abfuhr der abgetrennten Flüssigkeit aufweist. Die Gesamtvorrichtung bildet daher eine kompakte Baueinheit, die ohne äußere Verrohrungen auskommt, was bei dem sehr hohen, in Frage kommenden Druckniveau besonders vorteilhaft ist.

Das Gehäuse kann einen sich entlang der vertikalen Achse erstreckenden Hohlraum aufweisen, in dem der Zentrifugalabscheider zwischen dem darüberliegenden Koaleszerfilter und einem darunterliegenden Sammelraum für die Aufnahme abgeschiedener Flüssigkeit angeordnet ist. Bei dieser Anordnung kann Flüssigkeit unmittelbar aus dem Zentrifugalabscheider in den Sammelraum tropfen.

Das die Ringöffnung begrenzende Rohrstück kann Teil einer Verbindung zwischen dem achsnahen Bereich des Zyklonzylinders und dem oberen Bereich des Sammelraums bilden, so dass das sich im achsnahen Bereich des Zyklongehäuses befindliche Gas, als die weniger dichte Mischkomponente, unmittelbar in den oberen Bereich des Sammelraums gelangt.

Der Koaleszerfilter kann in der bei derartigen Filtern üblichen Weise ein einen inneren Filterhohlraum umgebendes Filtermaterial aufweisen, wobei ein Verbindungskanal zwischen dem oberen Bereich des Sammelraums, der über das Rohrstück mit dem achsnahen Bereich des Zyklonzylinders in Verbindung ist, und dem Filterhohlraum des Koaleszerfilters vorgesehen ist. Dadurch gelangt das über das Rohrstück aus dem Zyklonabscheider austretende, einen verringerten Flüssigkeitsanteil enthaltende Gas zu der die Feinabscheidung durchführenden zweiten Abscheidestufe.

Bei besonders vorteilhaften Ausführungsbeispielen weist der Koaleszerfilter ein koaxiales Innenrohr auf, das an seinem oberen Ende in den an die Außenseite der Filtermantelfläche angrenzenden Raum des Gehäuses ausmündet und an seinem unteren Ende zu dem Gehäuseausgang für den Gasteil führt. In besonders vorteilhafter Weise erfolgt dadurch die Abführung des Gases aus der den Koaleszerfilter enthaltenden Filterkammer nicht von dem die Filtermantelfläche umgebenden Raum, sondern über ein axiales Innenrohr, so dass optimale Strömungsverhältnisse in der Filterkammer herrschen und dadurch keine Gefahr des Mitreißens koalisierter Flüssigkeit besteht, die sich an der Außenseite der Filtermantelfläche anlagert. Gemäß einem weiteren Vorteil dieses konstruktiven Aufbaus des Koaleszerfilters mit einem Innenrohr wird die Demontage beim Wechsel des Filtermaterials erleichtert. So lässt sich das Filtermaterial mit dem Innenrohr als Montageeinheit nach dem Abnehmen des Gehäuses aus der Vorrichtung herausnehmen und gegen eine neue Montageeinheit austauschen. Der Gehäuseausgang zum Gasteil und ein Verbindungskanal zur Filterkammer können dabei in dem nicht mit dem Gehäuse demontierten Teil der Vorrichtung angeordnet sein.

Für eine besonders wirksame Feinabscheidung kann mit besonderem Vorteil zwischen dem oberen Ende des Sammelraums und dem Verbindungskanal, der zu dem inneren Filterhohlraum des Koaleszerfilters führt, ein Demister als dritte Abscheidestufe vorgesehen sein. Diese dritte Abscheidestufe ist somit zwischen der ersten Abscheidestufe und der zweiten Abscheidestufe vorgesehen.

Zwischen dem Bodenbereich des Sammelraums und einem Entleerungsausgang kann ein Partikelfilter vorgesehen sein, um eine Pflegefiltration der ionischen Flüssigkeit bei Entleerung des Sammelraums durchzuführen. Der Sammelraum kann für die Bevorratung eines Flüssigkeitsvolumens ausgelegt sein, wobei eine Füllstandsüberwachung vorgesehen sein kann, um Entleerungsvorgänge nach Maßgabe einer Füllstandshöhe durchzuführen.

Die erfindungsgemäße Vorrichtung ermöglicht eine besonders effiziente Flüssigkeitsabscheidung bei sehr kompakter Ausführung des Gehäuses und bei einem Mindestmaß an erforderlicher Verrohrung, wobei eine druckstabile Bauweise in Edelstahlelementtechnik vorgesehen sein kann.

Nachstehend ist die Erfindung anhand eines in der Zeichnung dargestellten Ausführungsbeispiels im Einzelnen erläutert. Es zeigen:
- Fig. 1: einen verkürzt dargestellten Längsschnitt eines Ausführungsbeispiels der erfindungsgemäßen Vorrichtung;
- Fig. 2: einen abgebrochenen, lediglich den Bereich eines Zentrifugalabscheiders und eines darüberliegenden Koaleszerfilters zeigenden Längsschnitt, wobei die Schnittebene gegenüber Fig. 1 um 90° gedreht ist;
- Fig. 3: einen Horizontalschnitt entsprechend der Schnittlinie III-III von Fig. 1;
- Fig. 4: einen vergrößert gezeichneten Teillängsschnitt des den Zentrifugalabscheider enthaltenden Längenabschnitts mit der gleichen Schnittebene wie bei Fig. 1; und
- Fig. 5: einen ebenfalls vergrößerten Teillängsschnitt des Längenbereichs des Zentrifugalabscheiders und des Koaleszerfilters mit gleicher Schnittebene wie bei Fig. 2.

Unter Bezug auf die Zeichnung ist die Erfindung am Beispiel einer Vorrichtung erläutert, die zur Abtrennung von Flüssigkeitsanteilen aus einem Fluidstrom eines unter einem Druck von 700 bar bis 1000 bar stehenden Fluidgemisches vorgesehen ist. Das Fluidgemisch weist vorrangig ein Wasserstoffgas mit Anteilen einer ionischen Flüssigkeit auf. Möglicherweise in dem Fluidgemisch vorhandene Feststoffpartikel sind mittels der Vorrichtung ebenfalls von dem Gas trennbar. Es versteht sich, dass die aufgezeigte Vorrichtung für die Behandlung anderer Mediengemische benutzbar ist, die in einem Gas abzuscheidende Flüssigkeitsteile und gegebenenfalls abzuscheidende Feststoffpartikel enthalten.

Das dargestellte Ausführungsbeispiel der Vorrichtung weist ein langgestrecktes Gehäuse 1 auf, das im großen Ganzen die Form eines runden Hohlzylinders besitzt, dessen Achse 3 bei eingebauter Position der Vorrichtung vertikal verläuft. Das Gehäuse 1 weist ein oberes Gehäuseteil 5 auf, das mit seinem gerundeten Endstück 7 eine Koaleszer-Filterkammer 9 umgrenzt. Das untere offene Ende des oberen Gehäuseteils 5 ist mit einem Zwischenteil 11 dicht verschraubt, das den Übergang zu einem unteren Gehäuseteil 13 bildet, das die kreiszylindrische Außenform des oberen Gehäuseteils 5 fortsetzt und einen innenliegenden Sammelraum 15 umgrenzt, der an seinem unteren Ende durch ein dicht eingeschraubtes Bodenteil 17 geschlossen ist. Im Bodenteil 17 befindet sich ein Entleerungsausgang 19 mit einem vorgeschalteten Partikelfilter 21, über den im Sammelraum 15 befindliche Flüssigkeit vom Bodenbereich des Sammelraums 15 abführbar ist.

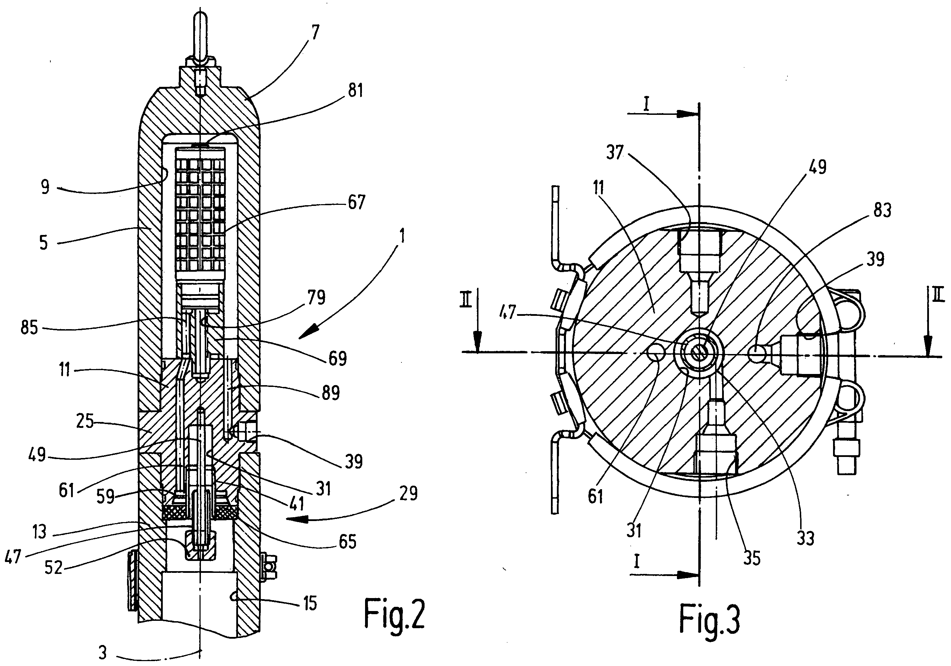

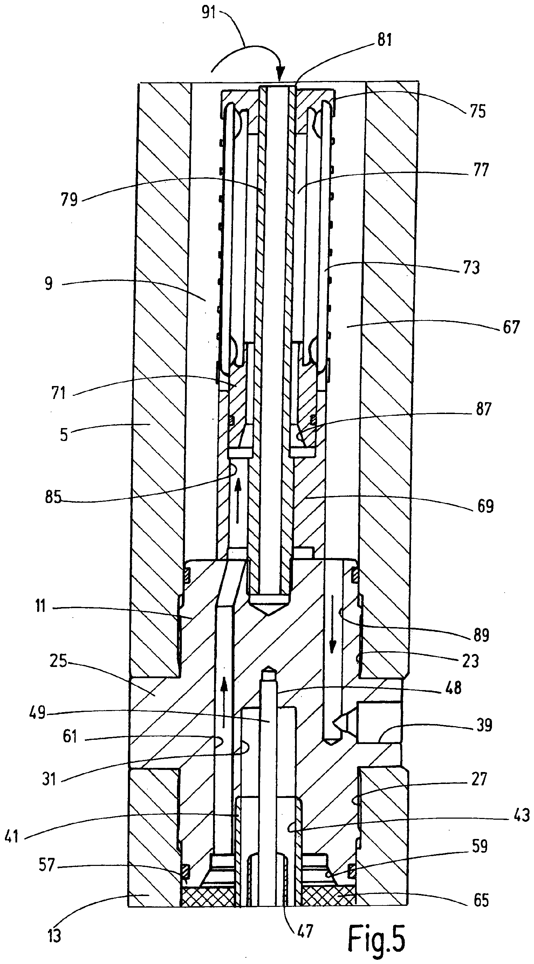

Das Zwischenteil 11 hat die Form eines Rotationskörpers, der im Anschluss an seinen mit dem oberen Gehäuseteil 5 verschraubten Gewindeabschnitt 23 einen radial vorspringenden Flansch 25 bildet, an den sich wiederum ein unterer Gewindeabschnitt 27 anschließt, an dem die dichte Verschraubung mit dem unteren Gehäuseteil 13 gebildet ist. Dabei bildet der Flansch 25 an Oberseite und Unterseite die jeweilige Anlagefläche für den Endrand des oberen Gehäuseteils 5 bzw. den Endrand des unteren Gehäuseteils 13. Im Zwischenteil 11 befindet sich der die erste Abscheidestufe bildende Zentrifugalabscheider 29 mit zur Achse 3 konzentrischem, kreiszylindrischem Zyklongehäuse 31, an dessen oberem Ende eine Einströmöffnung 33 einmündet. Über diese ist von einem im Flansch 25 ausgebildeten Fluideingang 35 her das Fluidgemisch in das Zyklongehäuse 31 tangential einströmbar, so dass im Zyklongehäuse 31 in der bei Zyklonabscheidern 29 üblichen Weise eine Drallströmung oder ein Zyklon gebildet wird. Außerdem befinden sich im Zwischenteil 11 ein Ausgang 37 für die Abfuhr des vom Fluidgemisch abgetrennten Gasteils, ein zu Eingang 35 und Ausgang 37 um 90° versetzt angeordneter Flüssigkeitsausgang 39 (s. Fig. 2 und 5) sowie Fluidverbindungen bildende Kanäle.

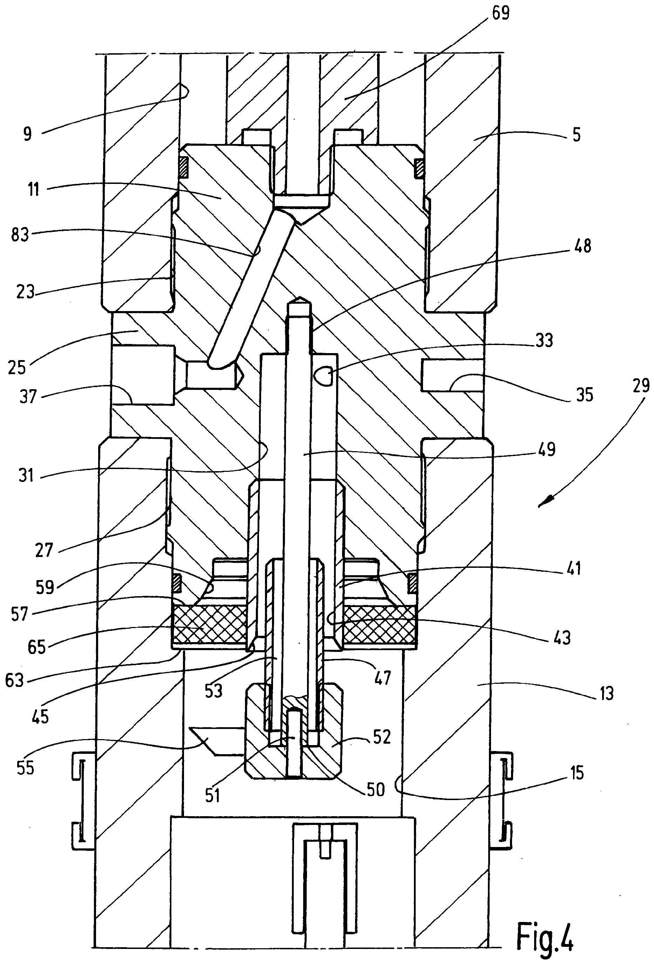

Wie der Fig. 4 am deutlichsten entnehmbar ist, bildet eine in das Zwischenteil 11 eingesetzte Hülse 41, die sich axial über das untere Ende des Zwischenteils 11 hinaus in Richtung des Sammelraums 15 erstreckt, den Endabschnitt der Innenwand 43 des Zyklongehäuses 31. Die Innenwand 43 begrenzt am unteren Ende der Hülse 41 eine Ringöffnung 45 zwischen einem Rohrstück 47, das sich zur Achse 3 konzentrisch in die Hülse 41 hinein und über deren unteres Ende hinaus in den Sammelraum 15 erstreckt. Bei dieser Anordnung bildet die Ringöffnung 45 die Verbindung zwischen dem achsfernen unteren Bereich des Zyklongehäuses 31 und dem Sammelraum 15, d.h. die Austrittsöffnung, über die Tropfen unmittelbar in den Sammelraum 15 abtropfen können, die sich als die dichtere Gemischkomponente des Fluidgemisches durch Zentrifugalkraftwirkung an der Innenwand 43 angelagert haben.

Eine am oberen Ende des Zyklongehäuses 31 im Zwischenteil 11 bei 48 verankerte Trägerstange 49 erstreckt sich koaxial durch das Zyklongehäuse 31 hindurch und über das untere Ende des Rohrstückes 47 hinaus. Mittels eines im unteren Ende 50 der Trägerstange 49 sitzenden Zapfens 51 ist an der Trägerstange 49 ein Kappenteil 52 angebracht, mit dem wiederum das untere Ende des Rohrstücks 47 verschraubt ist, so dass die Trägerstange 49 das Tragelement für das Rohrstück 47 bildet, das die Trägerstange 49 in einem Abstand umgibt. Dadurch bildet der Innenraum 53 des Rohrstücks 47 eine Verbindung zwischen dem achsnahen Bereich des Zyklongehäuses 31 und einem Gasaustrittsstutzen 55, der innerhalb des Kappenteils 52 in den Innenraum 53 des Rohrstücks 47 einmündet. Der sich im achsnahen Bereich des Zyklongehäuses 31 befindliche Gasteil tritt daher über den Austrittsstutzen 55 in den oberen Bereich des Sammelraums 15 aus.

In der dem Sammelraum 15 zugewandten Endfläche des Zwischenteils 11 befindet sich innerhalb seines Endrandes 57 eine trichterartige Vertiefung 59. Von dieser ausgehend erstreckt sich, wie am besten aus Fig. 5 ersichtlich ist, ein Verbindungskanal 61 zur oberen Endfläche des Zwischenteils 11. Zwischen dem Endrand 57 und einem Absatz 63 an der Innenwand des unteren Gehäuseteils 13 ist ein Demister 65 an sich bekannter Bauweise angeordnet, der das aus der Vertiefung 59 vorstehende Ende der Hülse 41 umgibt. Der aus dem Rohrstutzen 55 austretende Gasteil sowie sonstige Gasteile, die zumindest teilweise mit Flüssigkeit versetzt sind und das Rohrstück 47 außenumfangsseitig umgeben, passieren daher vor dem Eintritt in die Vertiefung 59 den Demister 65, bevor der jeweilige Gasteil von Flüssigkeit weiter befreit in aufsteigender Bewegung den Verbindungskanal 61 auf dem Strömungsweg zur Oberseite des Zwischenteils 11 durchströmt.

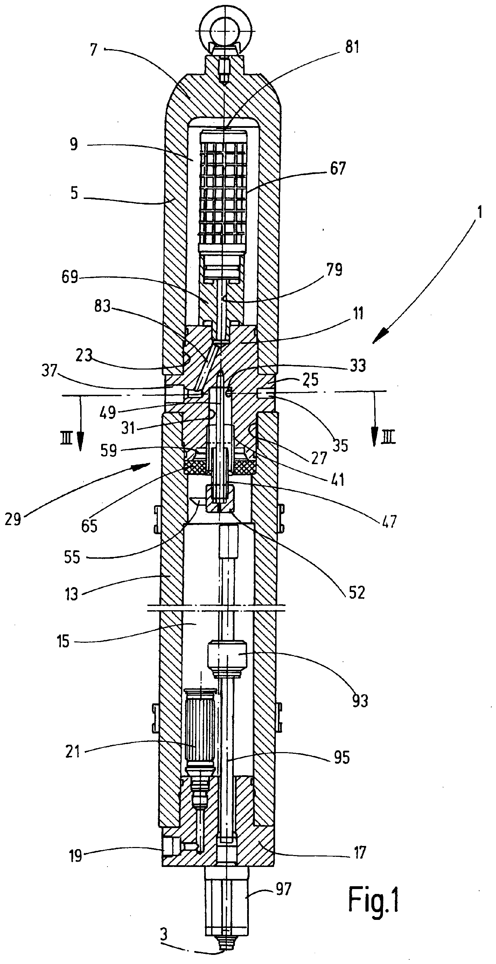

Auf der Oberseite des Zwischenteils 11, die das untere Ende der Koaleszer-Filterkammer 9 bildet, ist der die zweite Abscheidestufe bildende Koaleszerfilter 67 angeordnet. Dieser weist ein sich an die Oberseite des Zwischenteils 11 anschließendes Fußteil 69 auf, das einen Sitz für ein unteres Endteil 71 bildet, von dem sich das Filtermaterial 73 zum oberen Endteil 75 des Koaleszerfilters 67 hin erstreckt. Innerhalb des vom Filtermaterial 63 umgebenen Filterhohlraums 77 erstreckt sich ein Innenrohr 79 koaxial durch den gesamten Koaleszerfilter 67, wobei das Innenrohr 79 an seinem oberen, das Endteil 75 durchgreifende Ende 81 offen und somit mit dem Raum der Filterkammer 9 in Verbindung ist. Das andere, untere Ende des Innenrohres 79, das sich in den Zwischenteil 11 erstreckt, ist, wie Fig. 1 und 4 zeigen, über einen Schrägkanal 83 mit dem Ausgang 37 für das Gasteil verbunden.

Wie in Fig. 5 mit Strömungspfeilen angedeutet ist, gelangt das aus dem Rohrstutzen 55 im oberen Bereich des Sammelraums 15 ausgetretene Gas, das nach Durchgang durch den Zentrifugalabscheider 29 nur einen verringerten Flüssigkeitsanteil aufweist, nach Passieren des Demisters 65 über den Verbindungskanal 61, einen sich anschließenden Durchgang 85 im Fußteil 69 sowie eine Öffnung 87 im unteren Endteil 71 des Koaleszerfilters 67 zu dessen innerem Filterhohlraum 77 hin, dessen Filtermaterial 73, das die zweite Abscheidestufe bildet, von innen nach außen hin durchströmt wird. Dabei lagern sich verbliebene Flüssigkeitsanteile an der Außenseite des Filtermaterials 73 ab, von wo sie innerhalb der Filterkammer 9 nach unten wandern und vom Boden der Filterkammer 9 über einen Vertikalkanal 89 zum Flüssigkeitsausgang 39 gelangen.

Das Gas, das aus dem inneren Filterhohlraum 77 nach Durchströmen des Filtermaterials 73 zur umgebenden Filterkammer 9 gelangt, ist nach Passieren des Zyklonabscheiders 29, nach Passieren des Demisters 65 und des Koaleszerfilters 67 frei von Flüssigkeitsanteilen. Mittels des Zyklonabscheiders 29 sind sowohl Flüssigkeiten als auch Feststoffpartikel aufgrund von deren gegenüber Wasserstoff erhöhter Dichte von letzterem trennbar. Der im Abscheideprozess zwischengeschaltete Demister 65 ermöglicht es, Tropfen größer als 5 µm aus dem Gasstrom des Fluidgemisches abzuscheiden, so dass der nachfolgende Koaleszerfilter 67 ausschließlich der Behandlung feinster Tropfen kleiner als 5 µm dient. Der Demister 65 ist somit als dritte Abscheidestufe dem Koaleszerfilter 67 für eine besonders wirksame Feinabscheidung vorgelagert. Aus der Filterkammer 9 gelangt das Gas, wie in Fig. 5 mit Bogenpfeil 91 angedeutet, über das obere Ende 81 in das Innenrohr 79 und von diesem über den Schrägkanal 83 zum Ausgang 37 der Gasseite. Bei der Strömungsführung über das axiale Innenrohr 79 ist die Gefahr vermieden, dass Flüssigkeitstropfen, die sich in der Filterkammer 9 an der Außenseite des Filtermaterials 73 befinden, zum Gasausgang 37 hin mitgerissen werden.

Beim gezeigten Ausführungsbeispiel ist der Sammelraum 15 für die Aufnahme eines Vorrats abgeschiedener Flüssigkeit, die über die Ringöffnung 45 des Zyklongehäuses 31 in den Sammelraum abgetropft ist, ausgebildet, wobei beispielsweise ein Volumen von 5 Liter im Sammelraum 15 innerhalb des unteren Gehäuseteils 13 aufnehmbar sein kann. Wie in Fig. 1 gezeigt ist, kann für die Steuerung von Entleerungsvorgängen, die über den Ausgang 19 erfolgen, eine Steuerung mittels eines Füllstandsanzeigers vorgesehen sein. Beim vorliegenden Beispiel ist diesbezüglich ein Schwimmerkörper 93 vorgesehen, der auf einer Führung 95 geführt ist, die die Messstrecke für ein Wegmesssystem 97 bildet. Dabei kann es sich um eine berührungsfreie Sensoreinrichtung handeln, beispielsweise ein magnetostriktives Verfahren, bei dem innerhalb der Führung 95 ein Wellenleiter gespannt ist.

Zusammenfassend lässt sich feststellen, dass die konkrete Ausführungsform der erfindungsgemäßen Vorrichtung dazu dient, einen Gasstrom, beispielsweise Wasserstoff unter hohem Druck, der nur geringfügig mit Flüssigkeiten, beispielsweise ionischen Flüssigkeiten in einer Größenordnung von bis zu maximal 5 % verunreinigt ist, zu behandeln.

Für die dahingehende Auftrennung setzt die erfindungsgemäße Vorrichtungslösung drei verschiedene Abscheiderstufen ein, die zur Abtrennung der Verunreinigungen sowohl in flüssiger als auch in partikulärer Form dienen. In der Reihenfolge des Behandlungsprozesses wären dies:
1. Zentrifugalabscheider, der eine Abtrennung von Partikeln und Flüssigkeiten höherer Dichte ermöglicht,
2. Demister, der eine Abtrennung größerer Tropfen, sprich größer 5*µ*m ermöglicht und demgemäß einen Flüssigkeitsdurchbruch auf das Koaleszerfilterelement verhindert, und
3. Koaleszerfilterelement, das der Abscheidung von feinsten Aerosolen, vorzugsweise mit einer Tröpfchengröße < 5*µ*m dient.

Die Abführung des gefilterten Gases aus dem Sammelraum 9 durch die koaxial angeordnete Ableitung 79 bietet für die Vorrichtung neben der Minimierung der Flüssigkeitsverschleppung noch den weiteren Vorteil, dass der Druckbehälter bzw. das Filtergehäuse des Koaleszerfilters zweiteilig (Komponenten 5 und 11) ausgeführt werden kann, wobei alle Zu- und Ableitungen in einem feststehenden Teil 11 der Vorrichtung untergebracht werden können. Dies erleichtert den Elementwechsel ungemein, da keine Rohrleitungen demontiert werden müssen und der Gehäusetopf erlaubt einen "komfortablen" Zugang zum zu tauschenden Element. Ansonsten hätte man das Gehäuse dreiteilig konstruieren müssen, was weniger wartungsfreundlich und mit Mehrkosten verbunden ist.

## Patentansprüche

1. Vorrichtung zur Behandlung von Fluidgemischen, die Gase, wie insbesondere Wasserstoff (H₂), Luft, Stickstoff (N₂) oder Erdgase, sowie Flüssigkeiten, wie insbesondere ionische Flüssigkeiten, Hydrauliköl oder Prozessflüssigkeiten, enthalten, mit mindestens einer ersten Abscheidestufe (29) zum Auftrennen des Fluidgemisches in einen Flüssigkeitsanteil und einen Gasanteil, der mit einem verbleibenden Flüssigkeitsanteil verunreinigt ist, aus dem in mindestens einer weiteren Abscheidestufe (67) dieser verbliebene Flüssigkeitsanteil abgereinigt wird, wobei als erste Abscheidestufe ein Zentrifugalabscheider (29) vorgesehen ist, **dadurch gekennzeichnet, dass** eine Innenwand (43) eines Zyklongehäuses (31) des Zentrifugalabscheiders (29) an dessen an einen Sammelraum (15) angrenzendem unteren Ende eine Ringöffnung (45) zwischen einem zu einer vertikalen Achse (3) eines Gehäuses (1) konzentrischen Rohrstück (47) begrenzt, die eine Verbindung zwischen dem achsfernen Bereich des zylindrischen Zyklongehäuses (31) und dem Sammelraum (15) bildet.

2. Vorrichtung nach Anspruch 1 oder 2, **dadurch gekennzeichnet, dass** als zweite Abscheidestufe ein Koaleszerfilter (67) vorgesehen ist.

3. Vorrichtung nach einem der vorstehenden Ansprüche, **dadurch gekennzeichnet, dass** sämtliche Abscheidestufen (29, 67) in dem gemeinsamen Gehäuse (1) angeordnet sind, das einen Eingang (35) für das Fluidgemisch, einen Ausgang (37) für den von Flüssigkeit getrennten Gasteil sowie zumindest einen Entleerungsausgang (19, 39) zur Abfuhr der abgereinigten Flüssigkeit aufweist.

4. Vorrichtung nach einem der vorstehenden Ansprüche, **dadurch gekennzeichnet, dass** das Gehäuse (1) einen sich entlang der vertikalen Achse (3) erstreckenden Hohlraum aufweist, in dem der Zentrifugalabscheider (29) zwischen dem darüberliegenden Koaleszerfilter (67) und einem darunterliegenden Sammelraum (15) für die Aufnahme abgeschiedener Flüssigkeit angeordnet ist.

5. Vorrichtung nach einem der vorstehenden Ansprüche, **dadurch gekennzeichnet, dass** der Innenraum (53) des Rohrstücks (47) Teil einer Verbindung zwischen dem achsnahen Bereich des Zyklongehäuses (31) und dem oberen Bereich des Sammelraums (15) bildet.

6. Vorrichtung nach einem der Ansprüche 2 bis 5, **dadurch gekennzeichnet, dass** der Koaleszerfilter (67) ein einen inneren Filterhohlraum (77) umgebendes Filtermaterial (73) aufweist und dass ein Verbindungskanal (61) zwischen dem oberen Bereich des Sammelraums (15) und dem Filterhohlraum (77) des Koaleszerfilters (67) vorgesehen ist.

7. Vorrichtung nach Anspruch 6, **dadurch gekennzeichnet, dass** der Koaleszerfilter (67) ein koaxiales Innenrohr (79) aufweist, das an seinem oberen Ende (81) in den an die Außenseite des Filtermaterials (73) angrenzenden Raum (9) des Gehäuses (1) ausmündet und an seinem unteren Ende zu dem Gehäuseausgang (37) für den Gasteil führt.

8. Vorrichtung nach Anspruch 6 oder 7, **dadurch gekennzeichnet, dass** zwischen dem oberen Ende des Sammelraums (15) und dem Verbindungskanal (61), der zu dem inneren Filterhohlraum (77) des Koaleszerfilters (67) führt, ein Demister (65) als dritte Abscheidestufe vorgesehen ist.

9. Vorrichtung nach einem der vorstehenden Ansprüche, **dadurch gekennzeichnet, dass** zwischen dem Bodenbereich des Sammelraums (15) und einem Entleerungsausgang (19) ein Partikelfilter (21) vorgesehen ist.

## Claims

1. Device for treating fluid mixtures that contain gases, in particular such as hydrogen (H₂), air, nitrogen (N₂) or natural gases, and liquids, in particular such as ionic liquids, hydraulic oil or process liquids, comprising at least one first separation stage (29) for separating the fluid mixture into a liquid portion and a gas portion that is contaminated with a residual liquid portion (67), from which this residual liquid portion is cleaned in at least one further separation stage (67), a centrifugal separator (29) being provided as a first separation stage (29), **characterised in that** an inner wall (43) of a cyclone housing (31) of the centrifugal separator (29) delimits, at the lower end of said centrifugal separator adjacent to a collection chamber (15), an annular opening (45) between a pipe section (47) concentric to a vertical axis (3) of a housing (1), said annular opening forming a connection between the region of the cylindrical cyclone housing (31) that is furthest from the axis and the collection chamber (15).

2. Device according to either claim 1 or claim 2, **characterised in that** a coalescing filter (67) is provided as the second separation stage.

3. Device according to any one of the preceding claims, **characterised in that** all separation stages (29, 67) are arranged in the common housing (1), which comprises an inlet (35) for the fluid mixture, an outlet (37) for the gas portion separated from the liquid and at least one drainage outlet (19, 39) to discharge the cleaned liquid.

4. Device according to any one of the preceding claims, **characterised in that** the housing (1) comprises a cavity extending along the vertical axis (3) in which the centrifugal separator (29) is arranged between the overlying coalescing filter (67) and an underlying collection chamber (15) to receive the separated liquid.

5. Device according to any one of the preceding claims, **characterised in that** the inner chamber (53) of the pipe section (47) forms part of a connection between the region of the cyclone housing (31) that is close to the axis and the upper region of the collection chamber (15).

6. Device according to any one of claims 2 to 5, **characterised in that** the coalescing filter (67) comprises a filter material (73) surrounding an inner filter cavity (77) and **in that** a connecting channel (61) is provided between the upper region of the collection chamber (15) and the filter cavity (77) of the coalescing filter (67).

7. Device according to claim 6, **characterised in that** the coalescing filter (67) comprises a coaxial inner pipe (79), which leads, at its upper end (81), into the chamber (9) of the housing (1) adjacent to the outer side of the filter material (73) and, at its lower end, to the housing outlet (37) for the gas portion.

8. Device according to either claim 6 or 7, **characterised in that** a demister (65) is provided as a third separation stage between the upper end of the collection chamber (15) and the connecting channel (61) that leads to the inner filter cavity (77) of the coalescing filter (67).

9. Device according to any one of the preceding claims, **characterised in that** a particulate filter (21) is provided between the base region of the collection chamber (15) and a drainage outlet (19).

## Revendications

1. Dispositif de traitement de mélanges de fluides, qui contiennent des gaz, comme notamment de l'hydrogène (H₂), de l'air, de l'azote (N₂) ou des gaz naturels, ainsi que des liquides, comme notamment des liquides ioniques, de l'huile hydraulique ou des liquides de processus, comprenant au moins un premier étage (29) de séparation pour la séparation du mélange de fluides en une proportion de liquide et en une proportion de gaz, polluée par une proportion de liquide restante, dont, dans au moins un autre étage (67) de séparation, cette proportion de liquide restante est épurée, dans lequel il est prévu un séparateur (29) centrifuge comme premier étage de séparation, **caractérisé en ce qu'**une paroi (43) intérieure d'une enveloppe (31) de cyclone du séparateur (29) centrifuge délimite, à son extrémité inférieure voisine d'un espace (15) collecteur, une ouverture (45) annulaire entre une pièce (47) tubulaire concentrique à un axe (3) vertical d'une enveloppe (1), ouverture qui forme une communication entre la région, loin de l'axe, de l'enveloppe (31) cylindrique de cyclone et l'espace (15) collecteur.

2. Dispositif suivant la revendication 1 ou 2, **caractérisé en ce qu'**il est prévu un filtre (67) à coalescence, comme deuxième étage de séparation.

3. Dispositif suivant l'une des revendications précédentes, **caractérisé en ce que** l'ensemble des étages (29, 67) de séparation est disposé dans une enveloppe (1) commune, qui a une entrée (35) pour le mélange de fluides, une sortie (37) pour la partie de gaz séparée du liquide, ainsi qu'au moins une sortie (19, 39) de vidange pour l'évacuation du liquide épuré.

4. Dispositif suivant l'une des revendications précédentes, **caractérisé en ce que** l'enveloppe (1) a une cavité, qui s'étend suivant l'axe (3) vertical et dans laquelle le séparateur (29) centrifuge est disposé entre le filtre (67) de coalescence se trouvant au-dessus et un espace (15) collecteur sous-jacent de réception de liquide séparé.

5. Dispositif suivant l'une des revendications précédentes, **caractérisé en ce que** l'intérieur (53) de la pièce (47) tubulaire forme une partie d'une communication entre la région proche de l'axe de l'enveloppe (31) de cyclone et la région supérieure de l'espace (15) collecteur.

6. Dispositif suivant l'une des revendications 2 à 5, **caractérisé en ce que** le filtre (67) à coalescence a un matériau (73) de filtre entourant une cavité (77) intérieure de filtre et **en ce qu'**il est prévu un conduit (61) de communication entre la région supérieure de l'espace (15) collecteur et la cavité (77) du filtre (67) à coalescence.

7. Dispositif suivant la revendication 6, **caractérisé en ce que** le filtre (67) à coalescence a un tuyau (79) intérieur coaxial, qui débouche, à son extrémité (81) supérieure, dans l'espace (9), voisin du côté extérieur du matériau (73) de filtre, de l'enveloppe (1) et conduit, à son extrémité inférieure, à la sortie (37) de l'enveloppe pour la partie de gaz.

8. Dispositif suivant la revendication 6 ou 7, **caractérisé en ce qu'**il est prévu, comme troisième étage de séparation, un dispositif (65) antibuée entre l'extrémité supérieure de l'espace (15) collecteur et le conduit (61) de communication, qui conduit à la cavité (77) intérieure du filtre (67) à coalescence.

9. Dispositif suivant l'une des revendications précédentes, **caractérisé en ce qu'**un filtre (21) de particules est prévu entre la région de fond de l'espace (15) collecteur et une sortie (19) de vidange.
